(19) Europäisches Patentamt

European Patent Office

Office européen des brevets

(11) **EP 1 305 567 B1**

(12) **EUROPEAN PATENT SPECIFICATION**

(45) Date of publication and mention
of the grant of the patent:
**17.05.2006 Bulletin 2006/20**

(51) Int Cl.:
*G01B 11/08* (2006.01)   *G01B 11/24* (2006.01)

(21) Application number: **01953059.1**

(22) Date of filing: **27.06.2001**

(86) International application number:
**PCT/BE2001/000112**

(87) International publication number:
**WO 2002/001150 (03.01.2002 Gazette 2002/01)**

(54) **MEASUREMENT OF CYLINDRICAL OBJECTS THROUGH LASER TELEMETRY**

VERMESSUNG ZYLINDRISCHER OBJEKTE MIT HILFE VON LASER-TELEMETRIE

MESURE D'OBJETS CYLINDRIQUES PAR TELEMETRIE LASER

(84) Designated Contracting States:
**AT BE CH CY DE DK ES FI FR GB GR IE IT LI LU MC NL PT SE TR**

(30) Priority: **27.06.2000 EP 00870144
21.05.2001 GB 0112263**

(43) Date of publication of application:
**02.05.2003 Bulletin 2003/18**

(73) Proprietor: **UNIVERSITE CATHOLIQUE DE LOUVAIN
1348 Louvain la Neuve (BE)**

(72) Inventors:
• **DEMEYERE, Michael,
c/o Univ Catholique de Louvain
B-1348 Louvain-La-Neuve (BE)**
• **DEREINE, Emmanuel,
c/o Univ Catholique de Louvain
B-1348 Louvain-La-Neuve (BE)**
• **EUGENE, Christian,c/o Univ Catholique de Louvain
B-1348 Louvain-La-Neuve (BE)**
• **NAYDENOV, Volodia
B-1348 Louvain-La-Neuve (BE)**

(74) Representative: **Bird, Ariane et al
Bird Goën & Co
Klein Dalenstraat 42A
3020 Winksele (BE)**

(56) References cited:
EP-A- 0 871 008     US-A- 5 046 852
US-A- 5 090 811     US-A- 5 129 010

**Description**

**Technical field of the invention**

The present invention relates to a method and a device for measurement of a diameter of cylindrical objects from a distance, and more particularly but not limited thereto, to a method and a device for the diameter measurement of trees in a forest. Other applications might for example be inaccessible pipe measurement or quality control, e.g. to determine whether a pipe has expanded on some of its parts.

**Background of the invention**

The computerisation of the diameter measurement of the trees of forests, as a part of the "hammering" process preceding the cutting down or for inventory purposes, is one of the present challenges of forest surveying. The front end of this process is to record measurements on the spot using an electronic forest caliper avoiding in such a way to manually encode the results which is a possible source of error.

A traditional instrument for doing this is of the sliding rule type: two parallel arms, one fixed to a rule and one adapted to be slidable along the rule, come to embrace a tree, thus measuring its diameter. Its disadvantages lay in the mobile mechanical part, which is a source of wear and fouling, and in the fact that both hands are needed for using it.

In order to overcome these problems, a calliper based on ultrasonics has been created, as described in C. Eugène, "The Ultrasonic Angular Caliper: a Promising New Tool for Computerized Forest Surveying", Bulletin des recherches agronomiques de Gembloux (Belgium), 1990, vol. 25, n°1, pp. 153-160. It is a device with two arms connected to each other with a fixed angle in between them. A signal-transmitting device is mounted in the connection point, transmitting an ultrasonic wave, as well as a signal-receiving device, which receives the reflected ultrasonic wave. The diameter of a tree is calculated from the calculation of the distance L between the connection point of the two arms of the angular calliper and the tree. This distance L is calculated based on the time needed for the ultrasonic wave to travel forth and back, and on the velocity of the ultrasonic wave in the air, which is dependent on the temperature. An advantage of the device described is that it does not contain mobile components and that it can be handled with one hand only. The other hand is then free to carry out hammering operations or to encode secondary data on a keyboard such as the tree's species, the parcel number, etc.

One drawback is still present a contact between the apparatus and the tree is necessary.

A contactless measurement system for measuring three-dimensional shapes and dimension is described in US-5129010. A slit light source and a camera are placed in orthogonal positions, the slit light source projecting a curved line of light on the object the shape or dimension of which is to be measured. The radius of a circle is calculated from the co-ordinates of the sample points by performing circular fitting by the least squares method. For measuring a tree from a large distance, for example, this method is not practical, as light source and camera, placed under an angle of 90°, have to be too far from each other. If the angle between the light source and the camera would be diminished, thus bringing light source and camera closer to each other, the curve line becomes more and more an almost straight line. Circle fitting from a series of points of this line in the object plane gives a large uncertainty on the radius determination.

Another contactless measurement system is described in US-5046852. The invention described does not relate directly to calculating the diameter of a cylindrical workpiece, but rather to a method and apparatus for bending an elongate workpiece. The apparatus described has a plurality of triangulation systems each comprising a line projector consisting of laser and a rotatable mirror, and a CCD camera. The cameras are oriented towards the cylindrical object, and they are inclined with respect to the plane of the light beam projected by the line projector onto the cylindrical workpiece. The line of light is captured by the CCD camera to form an image thereof. The image of the line of light is a curved contour which shows two extremities. After having carried out a plurality of line scans and image captures, several fit operations are carried out, based on the captured images, one of which is the calculation of the diameter of the cylindrical object. The method requires the use on encoders to determine positions of optical components with respect to the object to be measured. This known apparatus is not suitable for the measurement of a cylindrical object at an unknown distance.

It is an object of the present invention to provide a method and a device to measure the diameter of cylindrical objects from a distance, in order to gain in comfort and efficacy when, for example, measuring the diameter of trees in a forest.

**Summary of the invention**

A method and a device according to the present invention accomplish the above objectives.

The present invention provides a method for measuring the diameter of a substantially cylindrical object with a longitudinal axis from <u>an unknown and arbitrary distance</u> comprising the steps of:

- generating an illuminated line of intersection with the substantially cylindrical object using a light source generating light in a plane,
- capturing an image of this line of intersection by means of a photoreceiver, the optical axis of the photoreceiver being oriented towards the object and being inclined with respect to the plane of illuminated line of intersection or the optical axis of the photoreceiver being displaced perpendicularly with respect to the plane of the illuminated line of intersection (10), the image having two extremities corresponding to the extremities of the line of intersection with the substantially cylindrical object and the two extremities being separated in a first direction, and the line of intersection (10) having a maximum or minimum point in a second direction which is orthogonal to the first direction, and
- calculating the diameter of the substantially cylindrical object (2) based on the image (11), the calculation being based on a supposition that the projections ($OP_2$, $OP_3$) from the photoreceiver (12) towards points on the substantially cylindrical object corresponding to the extremities are tangents to the substantially cylindrical object (2),
- wherein the step of calculating comprises determining the diameter based on only the ordinate of the highest or lowest point on tha image (11) of the line of intersection (10) between the extremities as measured along the second direction and on the abscissas of the two extremities of said image (11) as measured along the first direction. Said method is defined in independent claim 1.

Therewith is meant: in a first step forming tangential lines to the cylindrical object at the closest point of the cylindrical object with respect to the camera, and at the extremities seen by the camera; in a second step determining a point such that the distances from that point to each of the tangential lines is the same; and in a third step determining the radius of the cylindrical object, which corresponds to the distance between that point and one of the tangential lines.

The photoreceiver may be a camera such as a CCD camera.

Preferably, the line of intersection is substantially perpendicular to the longitudinal axis. This can be obtained by having the light plane perpendicular to the longitudinal axis, or having the optical axis of the photoreceiver perpendicular to the longitudinal axis of the substantially cylindrical object. However, according to the present invention, none of those need be exactly perpendicular to the longitudinal axis. Important is not to generate a light plane substantially parallel to the longitudinal axis.

Furthermore, the invention can also be used with skewed longitudinal axes. In that case the generating and capturing steps comprise

- either: generating an illuminated line of intersection with the substantially cylindrical object by projecting light in a plane from a light source, and capturing two images of this line of intersection by means of at least one photoreceiver, the optical axis of the at least one photoreceiver being oriented towards the object and being inclined under two different angles with respect to the plane of the illuminated line of intersection
- or: generating under different angles two illuminated lines of intersection with the substantially cylindrical object, by projecting light in a plane from at least one light source, and capturing an image of each line of intersection by means of a photoreceiver, the optical axis of the photoreceiver being oriented towards the object and being inclined with respect to the plane of each of the illuminated lines of intersection.

In case the cylindrical object to be measured would be tilted left, right, forward or backward, the intersecting line seen by the photoreceptor is no longer part of a circle but is now part of an ellipse. In that case, the measurement method requires at least two images of intersecting lines projected or captured under two different angles. This may be obtained for example by providing a double line generator at the exit of the light beam so as to project two intersecting lines at the same time, which are captured by a photoreceiver; or it may be obtained by projecting two lines, at different angles, one after the other, which are captured by a photoreceiver. Alternatively, one intersecting line may be generated, and looked at by two photoreceptors under different angles. These two photoreceptors may be two physically different photoreceptors, or it may be one and the same photoreceptor which is displaced between the two image capturing steps.

More general formulae have to be used in order to be able to find the true diameter of the tilted cylindrical object.

The step of projecting light in a plane may include both projection of light through a slit or scanning a light spot rapidly back and forwards to generate an image of a line within the integration period of the photoreceiver.

The step of calculating may comprise different parts, such as calculating a bijection or one-to-one correspondence between co-ordinates of points in an object plane and co-ordinates of points in an image plane, and determining, by means of the captured image, the distance between the closest point of the object and the photoreceiver. A function is bijective or a bijection or a one-to-one correspondence if it is both injective (no two values map to the same value) and surjective (for every element of the codomain there is some element of the domain which maps to it). This means there is exactly one element of the domain which maps to each element of the codomain.

The method may furthermore comprise any or all of the steps of, before calculating the diameter of the object, processing the captured image, filtering the captured image, subtracting an image captured with the light source turned off from an image with the light source turned on, binarising the captured image, selecting in the captured image a curve to be used for the calculation of the diameter of the object. Once a curve to be used is selected, this curve may furthermore be smoothed to eliminate variations and irregularities caused by noisy signals.

Preferably, the distance between the object and the photoreceiver is between 30 and 350 cm. However, by using another objective for the photoreceiver, measurements can be made from other distances, possibly with a reduced precision. For a given precision to be reached, a relationship between diameter and distance has to be used.

The substantially cylindrical object, the diameter of which is to be measured, may be for example a tree.

Preferred features of the method according to claim 1 are defined in the claims 2 to 12.

The present invention also provides a device for measurement, from an unknown and arbitrary distance, of a diameter of a substantially cylindrical object with a longitudinal axis, comprising

- a light source for generating light in a plane to form an illuminated line of intersection with the substantially cylindrical object,
- a photoreceiver suitable to take an image of the illuminated line of intersection, the optical axis of the photoreceiver being displaced perpendicularly with respect to the plane of the line of intersection or the optical axis of the photoreceiver being inclined with respect to the plane of the illuminated line of intersection, the image having two extremities representing the extremities of the illuminated line of intersection with the substantially cylindrical object and the two extremities being separated in a first direction, and the line of intersection having a maximum or minimum point on the image in a second direction which is orthogonal to the first direction, and
- calculating means for calculating, starting from the image of the line of intersection, the diameter of the substantially cylindrical object, the calculations being based on a supposition that the projections from the photoreceiver towards points on the substantially cylindrical object corresponding to the extremities are tangents to the cylindrical object, wherein the calculating means is adapted to determine the diameter based on only the ordinate of the highest or lowest point on the image of the line of intersection between the extremities as measured along the second direction and on the abscissae of the two extremities of said image as measured along the first direction.

Therewith is meant: in a first step forming tangential lines to the cylindrical object at the closest point of the cylindrical object with respect to the camera, and at the extremities seen by the camera; in a second step determining a point such that the distances from that point to each of the tangential lines is the same; and in a third step determining the radius of the cylindrical object, which corresponds to the distance between that point and one of the tangential lines.

The light source is preferably a laser light source. The photoreceiver may be a camera, e.g. a CCD camera.

According to a preferred embodiment, a line generator is placed in front of the light source in order to obtain a light plane which, upon intersection with the substantially cylindrical object generates an illuminated line of intersection.

The camera is preferably a CCD camera. A monochrome camera is sufficient.

Preferably a filter is placed in front of the camera, in order to filter out parts of the image not pertaining to the line of intersection.

A device according to the present invention may furthermore comprise means for carrying out image processing.

The present invention also provides a computer system comprising an input device for receiving an image of an line of intersection of light in a plane with a substantially cylindrical object at an unknown and arbitrary distance, the optical axis of a photoreceiver capturing said image being displaced perpendicularly with respect to the plane of the line of intersection, the image having two extremities representing the extremities of the line of intersection with the substantially cylindrical object and the two extremities being separated in a first direction, and the line of intersection having a maximum or minimum point in a second direction which is orthogonal to the first direction, the computer system being adapted for calculating, starting from the image of the line of intersection, the diameter of the substantially cylindrical object, the calculation being based on a supposition that the projections from the photoreceiver towards points on the substantially cylindrical object corresponding to said extremities are tangents to the substantially cylindrical object and making use, for calculating said diameter, of only the ordinate of the highest or lowest point on the image of the line of intersection between the extremities as measured along the second direction and on the abscissae of the two extremities of said image as measured along the first direction.

The computer system may furthermore be adapted for carrying out image processing on the image of the line of intersection.

The invention furthermore relates to a computer program product being adapted for executing a method of any of claims 1 to 12 when executed on a computing device.

The invention also relates to a computer readable data carrier having stored thereon a computer executable code being adapted for executing a method of any of claims 1 to 12 when executed on a computing device.

Other features and advantages of the present invention will become apparent from the following detailed description, taken in conjunction with the accompanying drawings, which illustrate, by way of example, the principles of the invention.

**Brief description of the drawings**

Fig. 1 is a three dimensional view of a configuration of a device according to an embodiment of the present invention. The cylindrical object is supposed with its longitudinal axis vertical as a matter of example.

Fig. 2a is a view in a vertical plane of the configuration of Fig. 1.

Fig. 2b is a view in a horizontal plane of the configuration of Fig. 1.

Fig. 3 shows a view in a vertical plane of the geometry of a device according to an embodiment of the present invention.

Fig. 4 illustrates a transition from an image plane (on the left) to an object plane in top view (on the right), in the specific set-up of an object being centered with respect to a camera.

Fig. 5 illustrates the method according to the present invention, in the specific set-up of an object being displaced with respect to a centre line of a camera (top view in the object plane).

Fig. 6 shows an example of a curve in the image plane in the specific set-up of an object being centered with respect to a camera. It is to be noted that $X_{1,pix} = 0$, implying $X_{2,pix} = - X_{3,pix}$ and $Y_{2,pix} = Y_{3,pix}$.

Fig. 7 illustrates some measurement results. The central horizontal line and the dotted lines represent respectively the mean radius value and this value shifted by +/-1 %.

Fig. 8 is a block diagram of a typical computer system in which the method of the present invention may be embodied.

Fig. 9 illustrates a three dimensional view in case the cylindrical object is inclined with respect to a horizontal optical axis.

Fig. 10 is a view in a vertical plane of the configuration of Fig. 9.

Fig. 11 shows a top view of an ellipse in the object plane.

Fig. 12 shows a view in a vertical plane in order to enable the calculation of the angle θ.

Fig. 13 shows a view in the image plane in order to enable the calculation of the angle φ.

Fig. 14 illustrates the relative error on the radius if the cylinder orientation is not taken into account.

In the different figures, the same reference figures refer to the same or analogous elements.

**Description of the illustrative embodiments**

The present invention will be described with respect to particular embodiments and with reference to certain drawings but the invention is not limited thereto but only by the claims. The drawings described are only schematic and are non-limiting.

A device according to the present invention is based on an optical method exploiting a strictly geometrical approach. The general principle used is a known principle of laser telemetry under structured lighting, as described in C. Loughlin, "Distance Sensing : Making Light Work", Sensor Review, 1989, vol. 9, n°3, pp. 131-136 and in C. Silvaggi, F. Luk, W. North, "Relative Position Sensor Using Structured Light", Proc. of the IFAC Symposium "Components, Instruments & Techniques for Low Cost Automation and Applications", Valencia (Spain), Nov. 1986, Pergamon, Oxford, 1988, pp. 71-74. This technique comprises projecting a luminous pattern on the surface of objects to be measured, and to use the distortion of the pattern to calculate distances. The nowadays most frequently used pattern is a light plane. The intersection of such a light plane with an object generates a line, which can be studied.

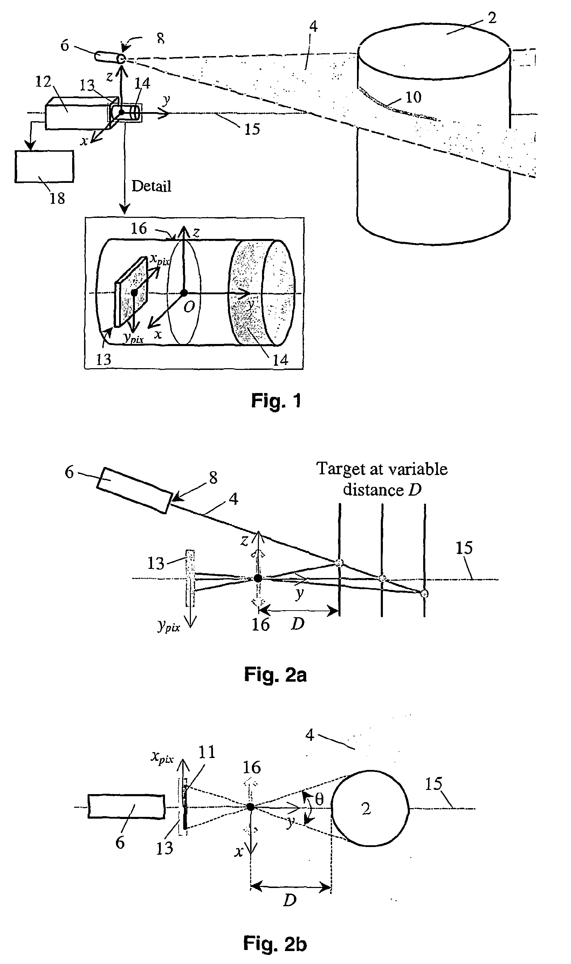

Fig. 1 shows a substantially cylindrical object 2 standing vertically. The diameter or radius of this object 2 is to be measured. A laser light plane 4, e.g. formed by a low power (a few mW) red laser diode 6 projected through a line generator 8 illuminates the object 2. The laser light plane 4 is inclined by a small angle with respect to a horizontal plane, thus creating a curved line 10 on the object 2. This curved line 10 is observed e.g. by a standard monochrome CCD camera 12 standing horizontally (its optical axis 15 lying in a horizontal plane), provided with a CCD sensor 13. With a small angle between the horizontal plane or the optical axis and the light plane, is meant an angle smaller than 30°, preferably smaller than 20° and most preferred smaller than 10°. As this angle is different from zero, the line appears curved to the camera.

An equivalent set-up (not represented) could be such that the laser plane or light plane lies in a horizontal plane, thus creating a curved line on the object, and that the camera looks at this line under a small angle between the optical axis of the camera and the horizontal plane. With a small angle between the horizontal plane or the light plane and the optical axis, is meant an angle smaller than 30°, preferably smaller than 20° and most preferred smaller than 10°.

A filter, such as a band-pass filter or preferably a narrow-band interference filter 14, centered on the laser diode's wavelength, is set up in front of the camera's objective 16 in order to increase the contrast between the curve 10 to be extracted and the rest of the scene. The camera 12 is preferably connected to a computer system 18 such as a calculation unit or PC, for data extraction and calculations. Alternatively, the camera 12 may have a memory to store captured data but no calculation means. The camera 12 can then be provided with an interface which can be plugged in into an input of a separate computer system 18, for subsequent downloading of the stored data into the computer system 18, and doing the calculations.

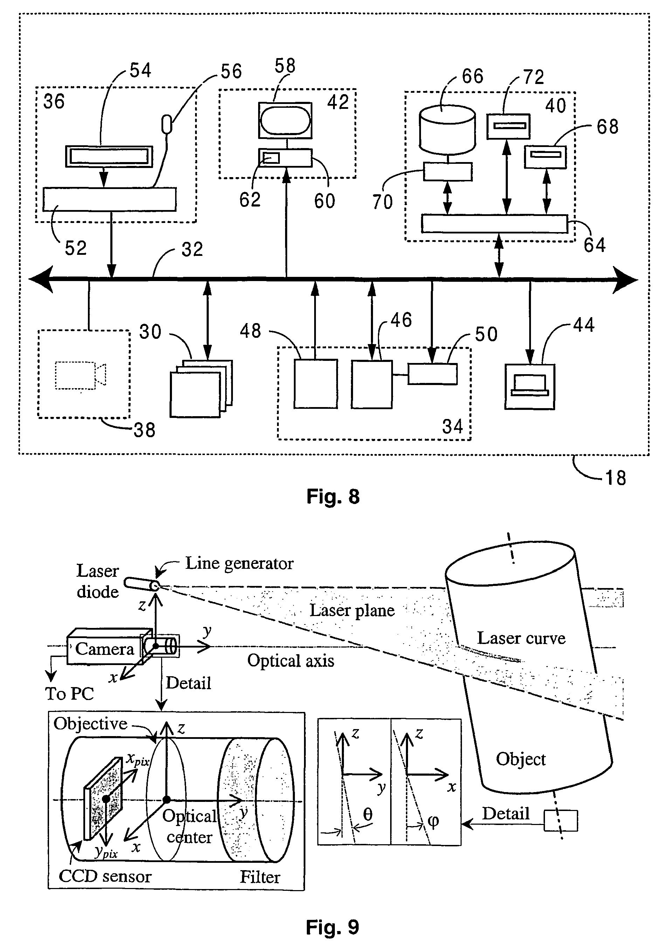

Fig. 8 is a simplified block diagram of such a computer system 18, in which the method of the present invention may be embodied. A computer system such as system 18, suitably programmed to embody the method of the present invention, is part of the invention.

A computer system 18 includes a processor 30 (such as a Pentium III microprocessor supplied by Intel Corp. USA) that may communicate with a number of peripheral devices via a bus subsystem 32. These peripheral devices may include a memory subsystem 34, a user input facility 36 (for inputting reference numbers for example), a camera input facility 38 (for receiving captured data from the camera 12), and a file storage system 40. Depending on the implementation (the computer system may be a desktop system, a portable system of an embedded controller), the computer system may also comprise a display subsystem 42, and output devices such as a printer 44.

The term "bus system" is used generically so as to include any mechanism for allowing the various components of the system communicate with each other digitally as intended. The different components of the computer system 18 need not be at a same physical location. Portions of the computer system 18 could be connected via various network media, including wireless transmission media.

Memory subsystem 34 includes a number of memories including a main random access memory ("RAM") 46 and a read only memory ("ROM") 48 in which executable computer program instructions are stored. In some embodiments, a DMA controller 50 may be included, which enables transfer from or to memory without going through processor 30.

Input user facility 36 typically includes a user interface adapter 52 for connecting a keyboard 54 and/or a pointing device 56 to bus subsystem 32. The pointing device may be an indirect pointing device such as a mouse, trackball, touchpad or graphics tablet, or a direct pointing device such as a touch screen device incorporated into a display device 58.

Display subsystem 42 typically includes a display controller 60 for connecting a display device 58 to the bus subsystem 32. The display device 58 may be a cathode ray tube ("CRT"), a flat-panel device such as a liquid crystal display ("LCD") or a gas plasma-based flat-panel display, or a projection device, or similar. The display controller 60 provides control signals to the display device 58 and normally includes a display memory 62 for storing the pixels that appear on the display device 58.

The file storage system 40 provides persistent (non-volatile) storage for program and data files, and includes an I/O adapter 64 for connecting peripheral devices, such as disk and tape drives, to the bus subsystem 32. The peripheral devices typically include at least one hard disk drive 66 an at least one floppy disk drive ("diskette") 68. The hard disk drive 66 may include a cache memory subsystem 70, which includes fast memory to speed up transfers to and from the disk drive. There may also be other devices such as a CD-ROM drive 72 and optical drives. Additionally, the system may include hard disk drives of the type with removable media cartridges. The computer system may be connectable to a wide area network such as the Internet by a suitable communications adapter and modem.

Those skilled in the art will appreciate that the hardware depicted in Fig. 8 may vary, depending on the implementation (controller embedded in the camera or stand-alone computer system with input means for receiving captured images). Some of the elements of the computer system mentioned above may or may not be present in a computer system according to the present invention, adapted for calculating, starting from the image 11 of the line of intersection 10, the diameter of a substantially cylindrical object 2.

When carrying out a measurement, the camera 12 does of course not only see the curved line 10 on the object 2, it for example also sees other illuminated objects illuminated by the laser plane 4. The image captured by the camera 12 is preferably treated or processed so as to retain only an image of the curved line 10.

A first step in the treatment of the captured image may be the subtraction of two images, a first image taken when the laser diode 6 is on, and a second image taken when the laser diode 6 is off. In principle, after this step, only the desired curve should be present. This is not completely the case if for instance a slight movement of the camera occurred between the two images; this justifies the bandpass filter above.

Binarisation may be a second step in the image treatment: either pixels are illuminated, and thus white, or they are not, and thus they are black. Pixels that would have another grey value are converted into black or white, depending on which grey value they have. Morphological operators may be used to extract the line such as dilation, erosion, opening and closing. In the following it will be assumed that pixels from the line of intersection are white and others are black.

A next step may be selection of the curve to be looked at. This selection is done based on the fact that the pixels of the curve are white (illuminated), and on the fact that the curve must consist of more than, for example, 9 pixels. Groups of adjacent pixels are taken together and called a body. Bodies found to comprise less than 9 pixels are eliminated. Furthermore, every body of which the geometry does not look like a line (height larger than width for example) is eliminated as well. The curve sought can be considered a straight line locally, in view of its small curvature.

At this level, different lines or curves may still be left over in the image. A problem is that the curve which is sought, may consist of one or more of these curves. This may be due to the binarisation step, during which darker pixels have been set to black, so that now one curve may be split into a plurality of curves. Therefore, a rectangle which exactly fits around a body; is enlarged by e.g. 10 pixels in each direction (up, down, horizontal left, horizontal right). If the rectangles around two such bodies have an overlapping portion which is not empty, both bodies are considered to be one body.

The curve which is sought has to be selected among the remaining objects in the image. The centre point of each image object is calculated. It can be supposed that the operator will aim the camera 12 at the object 2 to be measured, so that the curve looked for will have its centre point as close as possible to the vertical axis of the camera 12. Selecting, among the remaining image objects the one with its centre point closest to the vertical axis of the camera 12, leads to the curve to be used for calculation of the diameter of the object 2 to be measured.

Alternative image object extraction procedures are included within the scope of the present invention. Some aspects of extraction of image objects can be found in "Intelligent Vision Systems for Industry", Batchelor and Whelan, Springer Press, 1997; "Traitement de l'Image sur Micro-ordinateur", Toumazet, Sybex Press, 1987; "Computer vision", Reinhard Klette and Karsten Schlüns, Springer Singapore, 1998; "Image processing: analysis and machine vision", Milan Sonka, Vaclaw Hlavac and Roger Boyle, 1998.

The curve thus found has a thickness of a plurality of pixels. In every column of pixels on the CCD sensor 13, the centre pixel of the curve is determined, and these centre pixels are taken to constitute a flattened curve. This curve, however, is not smooth, and a smoothing step is preferably carried out. For every point, except for the two extremities, an average of the height of that point and the two surrounding points is calculated, and the newly calculated point is taken as a point on the smoothed curve. This smoothening step is carried out a plurality of times, which leads to the final curve in the image plane, to be used for calculation of the diameter of the object 2. Alternative smoothing procedures are included within the scope of the invention.

The last step before the cylinder radius computation is the transfer from co-ordinates $(x_{pix}, y_{pix})$ in the image plane (i.e. the plane of the CCD sensor 13, which is after inversion the image on a screen 20) to co-ordinates (x,y) in the object plane (i.e. the laser plane). This is represented in Fig. 4, where it is supposed that the object 2 is centered, i.e. with the optical axis of the camera 12 intersecting the axis of the cylindrical object 2.

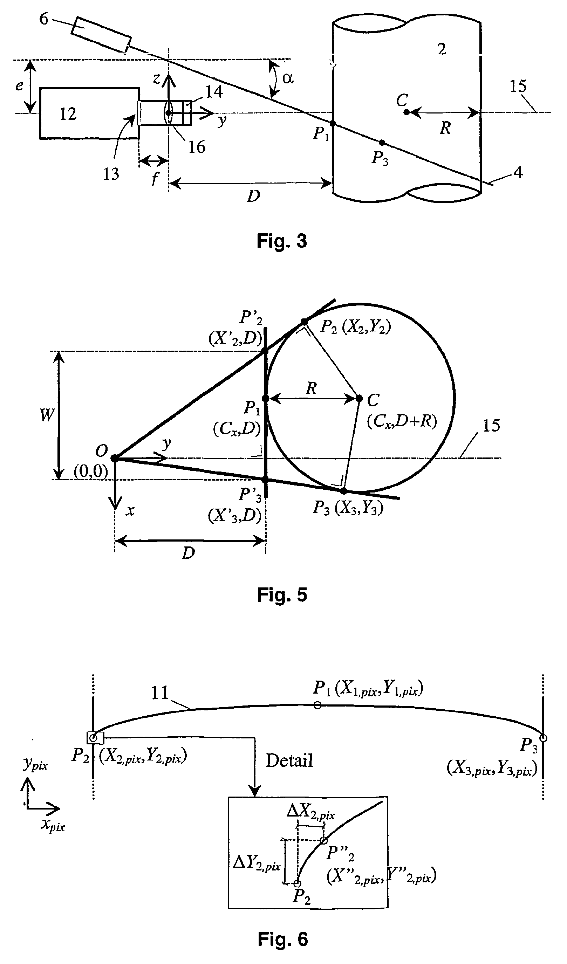

As the laser plane expression is (Fig. 3):

$$y \tan \alpha + z = e \, , \qquad (1)$$

any point on the object plane can be defined by its two horizontal projections $(X, Y)$ completed by (1). Therefore, a bijection or one-to-one correspondence between $(X_{pix}, Y_{pix})$ and $(X, Y)$ has to be found.

In the horizontal plane of Fig. 4 the following holds:

$$X_{CCD} = -f \frac{X}{Y} \qquad . \qquad (2)$$

supposing the distance $Y$ of the object point large with regard to the focal length $f$ (i.e. the image plane is the focal plane).

It is obviously adequate to identify the coordinates of a point in the image plane by line and column numbering. Supposing, as is usual, that an elementary pixel has a square section of side $a$, then this gives (without regard to the sign):

$$X_{pix} = \frac{X_{CCD}}{a} = \frac{f}{a} \frac{X}{Y} = f' \frac{X}{Y} \quad \text{(pixel number)} \qquad (3)$$

where $f' = f/a$ (reduced focal length).

Similarly, in the vertical plane (Fig. 3) the following holds:

$$Y_{pix} = f' \frac{Z}{Y} \quad \text{(pixel number)} \qquad (4)$$

To eliminate $Z$, equation (1) is used, and thus the bijection or one-to-one correspondence searched for is:

$$(X,Y) = \left( \frac{eX_{pix}}{Y_{pix} + f' \tan \alpha}, \frac{ef'}{Y_{pix} + f' \tan \alpha} \right) \tag{5}$$

It is worthwhile to note that $X$ depends on both $X_{pix}$ and $Y_{pix}$, while $Y$ depends on $Y_{pix}$ only.

For the radius calculation, a perfectly cylindrical object is supposed. The method according to the present invention may be called a "three-tangents method", based on the property that a circle is entirely defined by three of its tangents. In fact, three secant right lines define four circles to which these lines are tangent but the pertinent circle in the present case is unambiguous.

The specific tangents chosen are $P_1P_3'$, $OP_2'$ and $OP_3'$, as shown in Fig. 5, where the more realistic situation of an non-centered camera aiming is supposed. The knowledge of these tangents only demands the determination of distance $D$, i.e. the ordinate of the closest point to the operator (in the optical axis direction), and the abscissas $X_2'$ and $X_3'$ of the two extreme points (i.e. intersecting the two other tangents) of tangent $P_1P_3'$. Those points are not identifiable because they are non-material, but their co-ordinates in the object plane can be deduced from $P_2$ and $P_3$ abscissas and $P_1$ ordinate in the image plane.

Distance $D$ can be calculated using equation (5) and the co-ordinate $y_{pix}$ of the highest (or lowest) pixel in the image. As can be seen from Fig. 3, in the configuration with the light source 6 above the camera 12 and slightly inclined with respect to a horizontal plane, the highest pixel in the image represents the point closest to the camera, i.e. point P1 in Fig. 5. The distance $D$ is exactly the value calculated for $Y$ using equation (5). If the light source is below the camera the point would be the lowest.

The width W is then determined based on the width in pixels of the curve and on the distance $D$. It is to be noted that the width in pixels of the curve $P_2P_1P_3$ as seen by the camera 12 is identical to the width in pixels of a flat object with width W placed between the points $P_2'$ and $P_3'$.

In order to determine $X_2'$, again equation (5) is used, with $X_{pix}$ being the co-ordinate in x of the left pixel of the curve, and $Y_{pix}$ being the co-ordinate in y of the image point of P1. $X_3'$ is then $X_2'+W$.

A segment with width W is known now, as well as the positions of its extremities $P2'$ and $P3'$.

Lines from the optical centre $O$ of the camera, which is the origin of the axes, to $P2'$ and to $P3'$ can be constructed now. Therefore, 3 tangential lines have been obtained: $OP2'$, $OP3'$ and $P2'P3'$.

Mathematically, in order to find a circle tangent to the three lines, a point C has to be determined such that the distances from C to each of the right lines are the same. C is then the centre of the circle, and the distances between C and each of the tangential lines are the radius of the circle.

The radius is directly inferred from quantities $D, X_2'$ and $X_3'$, after some geometrical manipulations. It is found that:

$$R = \frac{DW}{\overline{OP_2'} + \overline{OP_3'} - W} \tag{6}$$

where

$$\begin{cases} \overline{OP_2'} = \sqrt{X_2'^2 + D^2} \ ; \ \overline{OP_3'} = \sqrt{X_3'^2 + D^2} \\ D = Y_1 \ ; \ W = |X_2'| + |X_3'| \end{cases} \tag{7}$$

Analysing the laser line 11 in the image plane allows to show why the method according to the present invention is the most suitable for computing the radius R of the object 2.

Supposing a centered camera (the conclusions are still valid in the non-centered case), the laser curve 10 in the object plane, projected on a horizontal plane, is the equation of the circle of Fig. 5 (in the centered case, with $C_x = 0$)

$$x^2 + y^2 - 2(D+R)y + D(D + 2R) = 0 \tag{8}$$

limited to the left portion ending in $P_2$ and $P_3$, defined by the condition :

$$y \le \frac{D(D+2R)}{D+R} \qquad \qquad (9)$$

Using equation (5), the curve in the image plane is obtained:

$$x_{pix}^2 = -D(D+2R)y_{pix}'^2 + 2(D+R)f'y_{pix}' - f'^2 \qquad (10)$$

with $y'_{pix} = (y_{pix} + f' \tan \alpha)/e$ (shifted reduced ordinate) subject to the condition :

$$y_{pix}' \ge \frac{f'(D+R)}{D(D+2R)} = Y_{pix,min}' \qquad (11)$$

An example of this curve is given in Fig. 6. The phenomenon at the basis of the choice of the method of the present invention is the loss of the laser line luminance $L$ (i.e. the information saved by the camera) near the tangency, as a consequence of the diffuse reflectance of the target.

The ideal case of a uniform diffusion is considered, i.e. reflecting under constant luminance in any direction. By Lambert's law, $L$ is proportional to the received illuminance $E$. Considering a laser plane of constant flux density, $E$ is proportional to the cosine of the angle of incidence, which tends to zero under grazing incidence, with the same consequence for $L$.

One or more feeble pixels are thus unavoidably cut from the curve ends during the image processing. Extreme points on which the method of the present invention works appear to be shifted to $P''_2$ and $P''_3$, introducing errors $\Delta X_{2,pix}$ and $\Delta Y_{2,pix}$ on tangency points $P_2$ and $P_3$ in the image plane, as shown in Fig. 6.

From equation (10) is derived that $dy_{pix}/dx_{pix}$ is infinite at the limits of the laser line 10 as seen by the camera 12. Therefore always $\Delta Y_{2,pix} \gg \Delta X_{2,pix}$. This implies considerable errors on $Y_2$ and $Y_3$, but also on $X_2$ and $X_3$, which depends on $Y_{pix}$ as well, as shown by equation (5).

On the other hand, the derivative $dy_{pix}/dx_{pix}$ is equal to zero at the center of the curve, implying a good accuracy on $D (= Y_1)$, directly deduced from $Y_{1,pix}$, for which the resolution moreover is sub-pixel. If the hypothesis of a centered aim is relaxed, $C_x (= X_1)$ will be highly erroneous. Several central pixels will actually have the same ordinate as $P_1$ in the image plane due to the discrete character of the image. It will thus be difficult to exactly identify its abscissa $X_{1,pix}$. On the contrary $X'_2$, found by equation (5) with $X'_{2,pix} = X_{2,pix}$ and $Y'_{2,pix} = Y_{1,pix}$, will have a noticeable accuracy. Actually, the relative error $\rho(X'_2)$ on this abscissa is nearly equal to $\rho(X_{2,pix})$ as $Y_{1,pix}$ is negligibly erroneous. It is therefore obtained that:

$$\rho(X_2') \cong \rho(X_{2,pix}) = \frac{\Delta X_{2,pix}}{X_{2,pix}} \qquad (12)$$

which is very small. $X'_3$ obviously has the same property.

Table I synthesises all these comments. It gives the accuracy on $P_1$, $P_2$, $P_3$, $P'_2$ and $P'_3$ co-ordinates, whereby $Y_1$, $X_2$ and $X_3$ are only used in the "three-tangents method" according to the present invention. It can be seen that all values used have a good accuracy.

Table I

|  | Accuracy | Origin |
|---|---|---|
| $Y_1 (= D)$ | Very good | Nil derivative $dy_{pix}/dx_{pix}$ at the center |
| $X_1$ | Very bad | Nil derivative $dy_{pix}/dx_{pix}$ at the center |
| $Y_2$ and $Y_3$ | Very bad | Infinite derivative $dy_{pix}/dx_{pix}$ at the extremes |
| $X_2$ and $X_3$ | Very bad | Infinite derivative $dy_{pix}/dx_{pix}$ at the extremes |
| $Y'_2$ and $Y'_3$ | Very good | Same ordinate as $P_1 (= D)$ |

Table continued

|  | Accuracy | Origin |
| --- | --- | --- |
| $X_2$ and $X_3$ | Good | One lost pixel has a minor influence |

The method of the present invention thus perfectly circumvents the restrictions introduced by the general shape of the laser line viewed on the CCD sensor, as it relies only on partial coordinates which are known accurately. More classical methods, for instance relying on the reconstruction of a circle from both coordinates of three of its points, would not be robust. This would be the case if the three points selected for the calculation were the points $P_1$, $P_2$ and $P_3$.

The main advantage of the method of the present invention is to allow in one operation only, the evaluation of both the distance $D$ between the object 2 and the camera's optical centre $O$ (by triangulation in a vertical plane, see Fig. 2a) and the angular aperture $\theta$ under which the object 2 is seen. The horizontal width of the curve 11 on the CCD sensor 13 gives a value for it, as can be seen from Fig. 2b. From these two measurements, the radius R of the object 2 can be calculated.

The result depends on three parameters only, as shown in Fig. 3:

- a laser plane tilt angle $\alpha$, which is the angle between the inclined laser plane 4 and a horizontal plane,
- the objective's focal length $f$, and
- the vertical distance e from the camera's optical centre $O$ to the laser plane 4.

This last parameter is preferably limited to about 10 cm to maintain the compactness and the ambulatory nature of the measurement instrument according to the present invention. The two other parameters (laser plane tilt angle $\alpha$ and objective's focal length $f$) are chosen so as to cover the distances and radii ranges desired to be measured. For example measurement of 10 to 50 cm diameter cylindrical objects can be carried out for distances up to 3.5 m, whereby the main criterion is that the laser curve 10 seen by the camera 12 stays in the CCD sensor frame 13.

The present invention includes a calibration procedure which is important because of the critical value of parameter $\alpha$, the angle between the light plane and the plane of the optical axis of the camera. A value of $\alpha$ which is low, for example $\alpha = 3°$ may be chosen.

For calibrating, a few measurements are made at several distances on a cylinder of known radius. The necessary data, i.e. $Y_{1,pix}$, $X_{2,pix}$ and $X_{3,pix}$, are memorized and then used to determine, via an optimization algorithm, the $\alpha$, $f$ and $e$ parameter values which minimize the relative error on the radius. The implemented technique consists in using the partial derivatives in relation to the parameters with an adequate weight function to correct $\alpha$, $f$ and $e$ in an iterative way. This calibration operation will be regularly repeated in relation to the instrument's use and robustness.

A PC-connected prototype of a measurement device according to the present invention has been built, comprising a 3 mW 656 nm laser diode 6 crossing a 30°-aperture line generator 8 and a Philips LTC0350/11 monochrome CCD camera 12 (with a pixel size $a$ = 1/160 mm). The focal length $f$ of the objective 16 has been fixed to 8 mm. The other parameter values have been chosen $\alpha = 3°$ and $e = 10$ cm. A Studio PCTV (by Pinnacle Systems) video capture card has been used as interface with a computer 18.

The results obtained during measurement in natural light have shown that for about 90% of the experiments made on cylindrical objects of various radii, the relative error on the radius is below 1 %. Similar results have been obtained on trees of various species, this figure concerning in this case the dispersion on the mean value instead of accuracy as the radius is not precisely defined for such irregular objects.

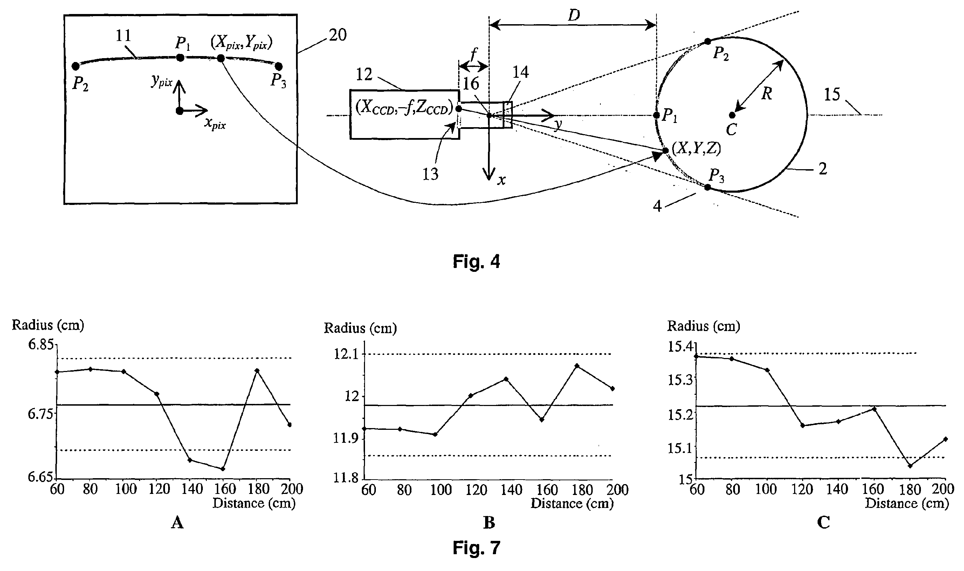

Fig. 7 illustrates some results, for trees only.

Graph A of Fig. 7 shows the results of measurements carried out on a Wild Cherry with a radius of about 7 cm, at different distances. Measurements have been carried out at distances between 60 and 200 cm of the tree, and measurement results for the radius lay between 6.66 and 6.82 cm. The mean value is 6.76 cm, shown by the horizontal black line. A 1% deviation from this mean value lies at 6.69 and 6.83 cm, as shown by the dotted lines.

Graph B shows the results of measurements carried out on an Ash with a radius of about 12 cm, at different distances between 60 and 200 cm of the tree. Measurement results for the radius lay between 11.91 and 12.07 cm. The mean value is 11.98 cm, shown by the horizontal black line. A 1% deviation from this mean value lies at 11.86 and 12.1 cm, as shown by the dotted lines.

Graph C shows the results of measurements carried out on an Oak with a radius of about 15 cm, at different distances from the tree, between 60 and 200 cm. Measurement results for the radius lay between 15.03 and 15.36 cm. The mean value is 15.22 cm, shown by the horizontal black line. A 1% deviation from this mean value lies at 15.07 and 15.37 cm, as shown by the dotted lines.

In general it can be said that an accuracy of 1 % on the radius of the measured objects is achieved (which fulfills the requirements in forest surveying) for diameters ranging from 10 to 50 cm and for a distance between the instrument and the tree ranging from 0.4 to 3.5 m. This accuracy is maintained for small cylindrical objets of the order of 2 cm in diameter with distances up to 1.5 m.

The developments above supposed that the cylinder axis was perpendicular to the plane of the camera. The method can in fact been generalized to any orientation of the cylinder axis with respect to the plane of the camera.

The cylindrical object under test has an arbitrary orientation $(\theta,\varphi)$ with respect to the camera plane. It is illuminated by two laser planes (in place of one in the previous situation) slightly tilted on the camera plane, thus creating two curved lines on the object (cf. Fig. 9, where only the upper laser plane is showed, the camera plane is supposed horizontal).

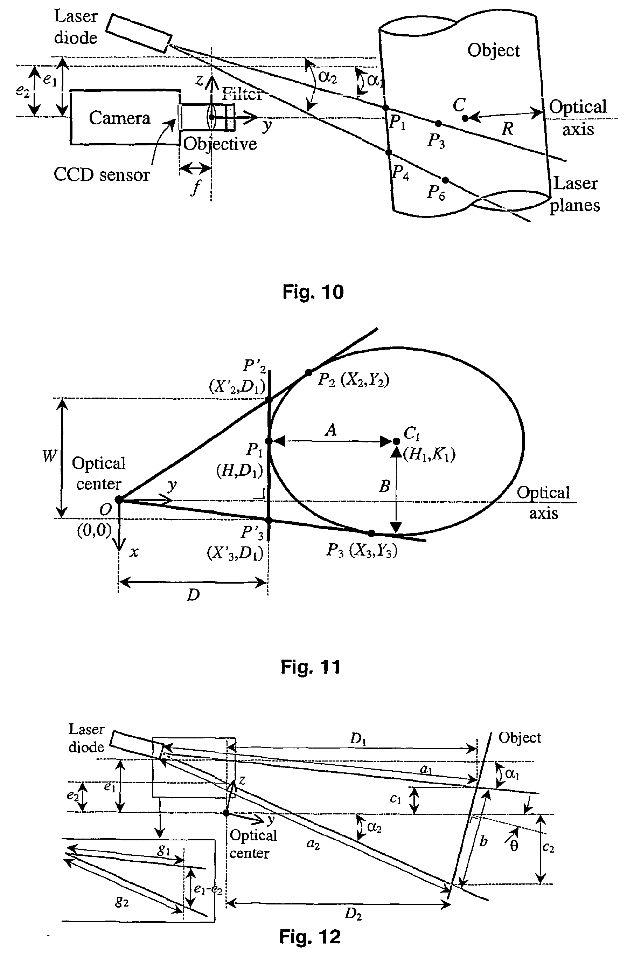

The result depends on five parameters (cf. Fig. 10) : the two laser plane tilt angles $\alpha_1$ and $\alpha_2$, the objective's focal length $f$ and the two vertical distances $e_1$ and $e_2$ from the camera's optical center to each laser plane.

*Radius Calculation*

If a cylinder of orientation $(\theta,\varphi)$ is now considered, the circle becomes an ellipse of axis $A$ and $B$ with :

$$A = \frac{R}{\cos\theta}$$
$$B = \frac{R}{\cos\varphi} \tag{13}$$

where $R$ is the cylinder radius (cf. Fig 11).

As for the previous particular case of transversal camera plane, the specific tangents chosen are $P_1P'_3$, $OP'_2$ and $OP'_3$ (duplicated for each laser plane). Their knowledge only demands the determination in the image plane of the upper point ordinate and the two extremities abscissa of the line.

*Finding an Ellipse Tangent to Three Definite Lines*

Three secant lines define an infinite family of ellipses to which they are tangent. The one corresponding to the object to be measured will be identified thanks to (13) establishing a link between the two axis $A$ and $B$ (via $R$, $\theta$ and $\varphi$). It is possible to find an analytical solution to the problem and thus to determine $R$. (see A. Horwitz, "Finding an Ellipse Tangent to Finitely many Given Lines", Southwest Journal of Pure and Applied Mathematics, Issue 2, December 2000, p.122-151).

The lines to which the ellipse has to be tangential, have as equation:

$$OP'_2 \equiv y = \frac{D}{X'_2} x$$
$$OP'_3 \equiv y = \frac{D}{X'_3} x \tag{14}$$
$$P'_2 P'_3 \equiv y = D$$

A distinctiona has to be made between the general case where the photoreceptor is not centered and the particular case of a centered photoreceptor.

*Non centered case $(X'_2 \neq - X'_3)$*

The location of the centres $(H,K)$ of the set of ellipses tangential to the three straight lines is given by:

$$\gamma \equiv 2hk + 2\left(X'_2 + X'_3\right)k + D\left(X'_2 + X'_3\right) = 0 \tag{15}$$

Therefore:

$$k = \frac{D/2\left(X_2' + X_3'\right)}{\left(X_2' + X_3'\right) - h} \tag{16}$$

The axes *a* and *b* are given by:

$$A^2 = h^2 - \frac{2khX_2'X_3'}{D\left(X_2' + X_3'\right)}$$

$$B^2 = k^2 - \frac{2Dhk}{X_2' + X_3'} \tag{17}$$

and are bound by (13), which allows to find a second equation binding *H* and *K*:

$$k = \frac{h}{X_2' + X_3'}\left[D - \frac{X_2'X_3'\cos^2\varphi \pm L}{D\cos^2\theta}\right] \tag{18}$$

where

$$L = \sqrt{\left(X_2'^2\cos^2\varphi + D^2\cos^2\theta\right)\left(X_3'^2\cos^2\varphi + D^2\cos^2\theta\right)} \tag{19}$$

Combining (16) and (18), *h* can be derived:

$$h = \frac{X_2' + X_3'}{2} \pm \frac{\sqrt{\mp 2LX_2'X_3' + 2X_2'^2X_3'^2\cos^2\varphi + D^2\left(X_2'^2 + X_3'^2\right)\cos^2\theta}\left(L \pm X_2'X_3'\cos^2\varphi \mp D^2\cos^2\theta\right)}{2D^2\left(X_2' + X_3'\right)\cos^2\theta\cos\varphi}$$

$$(20)$$

The solution to be retained is the one where the uppermost signs are kept (+, -, + and -).
By (16) it is possible to find *K*, and thus also *A* or *B*, which lead to *R* by means of (13):

$$R = \frac{1}{2}\left[\cos^2\varphi\left(X_2'^2 + X_3'^2 + X_2'X_3'\right) + D^2\cos^2\theta\right]$$

$$+ \frac{1}{2D^2\cos^2\theta}\left[\cos\varphi\sqrt{\left(-2LX_2'X_3' + 2X_2'^2X_3'^2\cos^2\varphi + D^2\left(X_2'^2 + X_3'^2\right)\cos^2\theta\right)}\left(L - X_2'X_3'\cos^2\varphi - D^2\cos^2\theta\right)\right]$$

$$- \frac{1}{2D^2\cos^2\theta}\left[L\left(2X_2'X_3'\cos^2\varphi + D^2\cos^2\theta\right) - 2X_2'^2X_3'^2\cos^4\varphi\right]$$

$$(21)$$

Centered case *(X'$_2$ = - X'$_3$)*

In the centered case, it is to be noted that *H* = 0. The axis of the ellipse are given by:

$$A^2 = \frac{X_3'^2\left(2k - D\right)}{D}$$

$$B^2 = \left(D - k\right)^2 \tag{22}$$

By (13) and (21) it is possible to find the ordinate *K* of the center of the ellipse:

$$K = D + X_3' \cos\varphi \left( \frac{X_3' \cos\varphi \pm \sqrt{X_3'^2 \cos^2\varphi + D^2 \cos^2\theta}}{D\cos^2\theta} \right) \qquad (23)$$

from which it is possible to deduce B, and thus the radius R of the cylindrical object:

$$R = \frac{X_3' \cos\varphi}{D\cos\theta} \left( X_3' \cos\varphi \pm \sqrt{X_3'^2 \cos^2\varphi + D^2 \cos^2\theta} \right) \qquad (24)$$

In this expression, the + sign has to be kept.

Angles θ et φ of course have to be computed. This will be done after some geometrical manipulations thanks to the double laser plane.

*Computing of angles θ et φ*

*Angle θ*

By working in the (y,z) plane of Fig. 12 (for the sake of simplification the optical axis is considered horizontal and the object is considered to be inclined over an angle θ, which is positif in the case of Fig.12).

From the distances $D_1$ and $D_2$, and by using the geometry of the system, it is found that:

$$\frac{\sin(\pi/2 + \alpha_1)}{g_2} = \frac{\sin(\pi/2 - \alpha_2)}{g_1} = \frac{\sin(\alpha_2 - \alpha_1)}{e_1 - e_2} \qquad (25)$$

from which $g_1$ and $g_2$, are obtained, which will be used in:

$$a_1 = \frac{D_1}{\cos\alpha_1} + g_1$$
$$a_2 = \frac{D_2}{\cos\alpha_2} + g_2 \qquad (26)$$

Therefrom:

$$b^2 = a_1^2 + a_2^2 - 2a_1 a_2 \cos(\alpha_2 - \alpha_1) \qquad (27)$$

and

$$c_1 = e_1 - D_1 \tan\alpha_1$$
$$c_2 = e_2 - D_2 \tan\alpha_2 \qquad (28)$$

Finally it is found that

$$\cos\theta = \frac{c_1 - c_2}{b} \qquad (29)$$

or, more completely:

$$\theta = \arccos\left(\frac{e_1 - D_1 \tan\alpha_1 - e_2 + D_2 \tan\alpha_2}{\sqrt{a_1^2 + a_2^2 - 2a_1 a_2 \cos(\alpha_2 - \alpha_1)}}\right) \qquad (30)$$

*Angle φ*

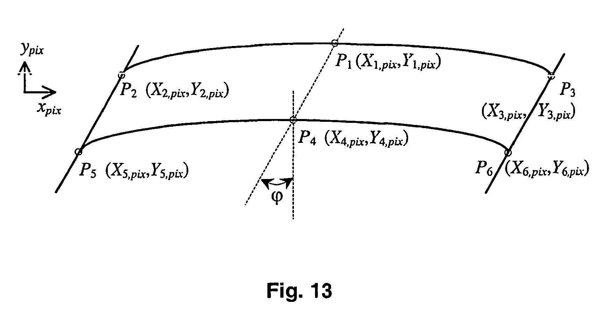

In the image plane ($x_{pix}, y_{pix}$), it is possible to calculate the angle φ (positive in the presented case). See Fig. 13.
Therefrom:

$$\tan\varphi = \frac{X_{2,pix} - X_{5,pix}}{Y_{1,pix} - Y_{4,pix}} = \frac{X_{3,pix} - X_{6,pix}}{Y_{1,pix} - Y_{4,pix}} \qquad (31)$$

*Committed Error if the Object Orientation is not Taken into Account*

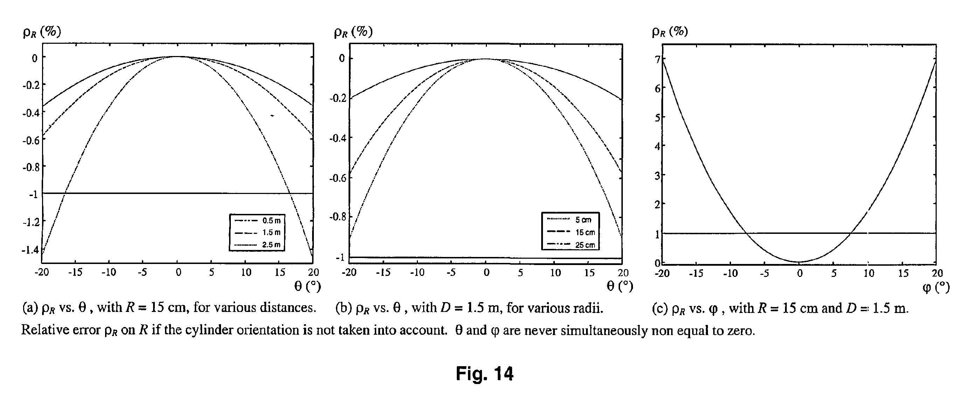

It is now possible to theoretically calculate the relative error on the radius that would be introduced if the formulas valid for the transversal case are applied, thus not taking the particular orientation of the object into account.
For the commodity of the representation the two rotations have been separated. On Fig. 14 it can be seen that only φ has a significant influence on the measurement accuracy. Fortunately, it is easy to see if this angle is negligible by observing if the laser line is not laterally skew
While the invention has been shown and described with reference to preferred embodiments, it will be understood by those skilled in the art that various changes or modifications in form and detail may be made without departing from the scope and spirit of this invention.
More particularly, the present invention is not limited to one illuminated line of intersection being generated. Different illuminated lines of intersection may be generated, which are parallel and spaced. Each of those lines of intersection can be examined separately, and a diameter can be calculated from each of them. The resulting diameters can be averaged. Any results lying far away from others can be discarded, e.g. those differing by three times the standard deviation from the average, or a weighted average can be taken, whereby results which are far away from others have less influence on the final result. Alternatively, the images of the different illuminated lines of intersection may be processed so as to generate a single curve. For instance each point on, or part of the curve can be formed from an average or weighted average of the curves, resulting in an averaged curve, from which a diameter is then calculated.
Furthermore, the longitudinal axis of the substantially cylindrical object can be automatically extracted, as explained in the books on image analysis mentioned above, and it can be determined whether the longitudinal axis is substantially perpendicular to the plane of the illuminated line of intersection or not. In case it is found they are not substantially perpendicular, a warning message can be generated so as to enable a user to manually tilt the device, or tilting of the device can be effectuated automatically in response to the determined inclination of the object.
In case the cylindrical object to be measured is tilted left or right with respect to a (vertical) plane perpendicular to the plane of light forming the illuminated intersection line, the present invention also includes performing a first diameter measurement, rotating the device for example 5° left with respect to the first measurement about the optical axis of the light source and doing a second diameter measurement, and rotating the device for example 5° right with respect to the first measurement and doing a third diameter measurement. These three diameters can be analysed. Generally, the first measurement should differ from the second and third measurement by an equal amount. However, if the object is tilted left or right then the the first measurement will not be symmetrical with respect to the second and third measurement. Using the three results the optimum value of the diameter can be obtained by fitting the three diameter values to a smooth curve such as a parabola and then calculating the maximum or minimum thereof. The diameter at this optimum position can then be taken as the best estimate of the diameter. Instead of rotating the device three intersection lines can be projected simultaneously or sequentially, the three lines including one which is substantially perpendicular to the longitudinal axis of the cylindrical object with the other two being rotated a fixed angle thereto e.g. 5°. Diameters are then calculated for each of these lines and the optimum diameter determined as before.
For cylindrical objects leaning backwards or forwards, the device can be inclined with respect to the plane of the illuminated intersection line instead of rotated. In this case three values are determined - a first value at the position where the light plane is assumed to be perpendicular to the object to be measured and second and third value calculated with the measurement device inclined 5° down and 5° up respectively. The optimum diameter can be aclculated from these three values as indicated above. Furthermore, instead of tilting the device, three lines can also be projected under three different angles, from which three diameter results are calculated, and from which, using a smooth curve such as a parabola, the best estimate of the diameter can be calculated.

**Claims**

1. A method for measuring the diameter of a substantially cylindrical object (2) from an unknown and arbitrary distance comprising the steps of:

   - generating an illuminated line of intersection (10) with the substantially cylindrical object (2) by projecting light in a plane from a light source (6),
   - capturing an image (11) of this line of intersection (10) by means of a photoreceiver (12), the optical axis (15) of the photoreceiver being oriented towards the object and being inclined with respect to the plane of the illuminated line of intersection (10) or the optical axis (15) of the photoreceiver (12) being displaced perpendicularly with respect to the plane of the illuminated line of intersection (10), the image (11) having two extremities corresponding to the extremities ($P_2$, $P_3$) of the line of intersection (10) with the substantially cylindrical object (2) and the two extremities being separated in a first direction, and the line of intersection (10) having a maximum or minimum point in a second direction which is orthogonal to the first direction, and
   - calculating the diameter of the substantially cylindrical object (2) based on the image (11), the calculation being based on a supposition that the projections ($OP_2$, $OP_3$) from the photoreceiver (12) towards points on the substantially cylindrical object corresponding to the extremities in the image are tangents to the substantially cylindrical object (2),

   wherein the step of calculating comprises determining the diameter based on only the ordinate of the highest or lowest point on the image (11) of the line of intersection (10) between the extremities as measured along the second direction and on the abscissae of the two extremities of said image (11) as measured along the first direction.

2. A method according to claim 1, wherein the step of calculating comprises calculating a bijection between co-ordinates of points in an object plane ($x$, $y$), and co-ordinates of points in an image plane ($x_{pix}$, $y_{pix}$).

3. A method according to any of the previous claims, wherein the step of calculating comprises determining, by means of the captured image (11), the orthogonal distance ($D$) between the closest point ($P_1$) of the object (2) and the photoreceiver (12).

4. A method according to any of the previous claims, further comprising a step of, before calculating the diameter of the object (2), processing the captured image (11).

5. A method according to claim 4, whereby the step of processing the captured image (11) comprises a step of filtering the captured image (11).

6. A method according to any of claims 4 or 5, whereby the step of processing the captured image (11) comprises a step of subtracting an image captured with the light source turned off from an image with the light source turned on.

7. A method according to any of claims 4 to 6, whereby the step of processing the captured image (11) comprises a step of binarising the captured image (11).

8. A method according to any of claims 4 to 7, whereby the step of processing the captured image comprises a step of selecting in the captured image a curve (11) to be used for the calculation of the diameter of the object (2).

9. A method according to claim 8, furthermore comprising a step of smoothing the curve to be used.

10. A method according to any of the previous claims, wherein the distance between the object (2) and the photoreceiver (12) is between 30 and 350 cm.

11. A method according to any of the previous claims, wherein the substantially cylindrical object is a tree.

12. A method according to any of the previous claims, wherein the substantially cylindrical object is inclined with respect to the illuminated line of intersection, the generating and capturing steps comprising

- generating an illuminated line of intersection with the substantially cylindrical object by projecting light in a plane from a light source, and capturing at least two images of this line of intersection by means of at least one photoreceiver, the optical axis of the at least one photoreceiver being oriented towards the object and being inclined under two different angles with respect to the plane of the illuminated line of intersection
- or generating under different angles at least two two illuminated lines of intersection with the substantially cylindrical object, by projecting light in a plane from at least one light source, and capturing an image of each line of intersection by means of a photoreceiver, the optical axis of the photoreceiver being oriented towards the object and being inclined with respect to the plane of each of the illuminated lines of intersection.

13. A device for measurement a diameter of a substantially cylindrical object (2) from an unknown and arbitrary distance, comprising

- a light source (6) for generating light in a plane to form an illuminated line of intersection (10) with the substantially cylindrical object (2),
- a photoreceiver (12) suitable to take an image (11) of the line of intersection (10), the optical axis (15) of the photoreceiver (12) being displaced perpendicularly with respect to the plane of the line of intersection (10) or the optical axis (15) of the photoreceiver (12) being inclined with respect to the plane of the illuminated line of intersection (10), the image (11) having two extremities representing the extremities ($P_2$, $P_3$) of the line of intersection (10) with the substantially cylindrical object (2) and the two extremities being separated in a first direction, and the line of intersection (10) having a maximum or minimum point on the image in a second direction which is orthogonal to the first direction, and
- calculating means (18) for calculating, starting from the image (11) of the line of intersection (10), the diameter of the substantially cylindrical object (2), the calculations being based on a supposition that the projections ($OP_2$, $OP_3$) from the photoreceiver (12) towards points on the substantially cylindrical object corresponding to the extremities (P2, P3) are tangents to the substantially cylindrical object (2),

wherein the calculating means is adapted to determine the diameter based on only the ordinate of the highest or lowest point on the image (11) of the line of intersection (10) between the extremities as measured along the second direction and on the abscissae of the two extremities of said image (11) as measured along the first direction.

14. A device according to claim 13, wherein the light source (6) is a laser light source.

15. A device according to any of claims 13 or 14, wherein a line generator (8) is placed between the light source (6) and the substantially cylindrical object.

16. A device according to any of claims 13 to 15, wherein the photoreceiver (12) is a CCD camera.

17. A device according to any of claims 13 to 16, wherein a filter (14) is placed in front of the photoreceiver (12) to filter out parts of the image which do not pertain to the light plane from the light source (6).

18. A device according to any of claims 13 to 17, furthermore comprising means for carrying out image processing (18).

19. A device according to any of claims 13 to 18, wherein the distance (D) between the object (2) and the photoreceiver (12) is between 30 and 350 cm.

20. A device according to any of claims 13 to 19, wherein the substantially cylindrical object is a tree.

21. Computer system (18) comprising an input device (38) for receiving an image (11) of a line of intersection (10) of light (4) in a plane with a substantially cylindrical object (2) at an unknown and arbitrary distance, the optical axis (15) of a photoreceiver (12) capturing said image (11) being displaced perpendicularly with respect to the plane of the line of intersection (10), the image (11) having two extremities representing the extremities ($P_2$, $P_3$) of the line of intersection (10) with the substantially cylindrical object (2) and the two extremities being separated in a first direction, and the line of intersection (10) having a maximum or minimum point in a second direction which is orthogonal to the first direction,
the computer system (18) being adapted for calculating, starting from the image (11) of the line of intersection (10), the diameter of the substantially cylindrical object (2), the calculation being based on a supposition that the projections ($OP_2$, $OP_3$) from the photoreceiver (12) towards points on the substantially cylindrical object corresponding to said extremities ($P_2$, $P_3$) are tangents to the substantially cylindrical object (2) and making use, for calculating said diameter, of only the ordinate of the highest or lowest point on the image (11) of the line of intersection (10) between the extremities as measured along the second direction and on the abscissae of the two extremities of said image (11) as measured along the first direction.

22. Computer system according to claim 21, furthermore being adapted for carrying out image processing on the image (11) of the line of intersection (10).

23. A computer program product being adapted for executing a method of any of claims 1 to 12 when executed on a computing device.

24. A computer readable data carrier having stored thereon a computer executable code being adapted for executing a method of any of claims 1 to 12 when executed on a computing device.

**Patentansprüche**

1. Verfahren zum Messen des Durchmessers eines im Wesentlichen zylindrischen Objekts (2) aus einem unbekannten und beliebigen Abstand, mit den Schritten:

  - Erzeugen einer erleuchteten Linie eines Schnitts (10) mit dem im Wesentlichen zylindrischen Objekt (2) durch die Projektion von Licht in einer Ebene von einer Lichtquelle (6),
  - Aufnehmen eines Bildes (11) dieser Schnittlinie (10) durch einen Photoempfänger (12), wobei die optische Achse (15) des Photoempfängers auf das Objekt ausgerichtet ist und gegenüber der Ebene der erleuchteten Schnittlinie (10) geneigt ist, oder die optische Achse (15) des Photoempfängers (12) senkrecht bezüglich der Ebene der erleuchteten Schnittlinie (10) mit dem im Wesentlichen zylindrische Objekt (2) verschoben ist, wobei das Bild (11) zwei Extrema entsprechend den Extrema ($P2$, $P3$) der Schnittlinie (10) mit dem im Wesentlichen zylindrischen Objekt (2) aufweist,

  wobei die zwei Extrema in einer ersten Richtung beabstandet sind, und wobei die Schnittlinie (10) ein Maximum oder ein Minimum in einer zweiten Richtung, die orthogonal zur ersten Richtung ist, aufweist, und

  - Berechnen des Durchmessers des im Wesentlichen zylindrischen Objekts (2) basierend auf dem Bild (11), wobei die Berechnung auf der Annahme basiert, dass die Projektionen ($OP2$, $OP3$) vom Photoempfänger (12) auf Punkte auf dem im Wesentlichen zylindrischen Objekt, die den Extrema im Bild entsprechen, Tangenten am im Wesentlichen zylindrischen Objekt (2) sind,

  wobei der Berechnungsschritt das Bestimmen des Durchmessers auf Basis von lediglich der Ordinate des höchsten oder niedrigsten Punktes auf dem Bild (11) der Schnittlinie (10) zwischen den Extrema entlang der zweiten Richtung gemessen und den Abszissen der zwei Extrema des Bildes (11) entlang der ersten Richtung gemessen umfasst.

2. Verfahren nach Anspruch 1, wobei der Berechnungsschritt das Berechnen einer Bijektion zwischen Koordinaten von Punkten in einer Objektebene ($x, y$) und Koordinaten von Punkten in einer Bildebene ($x_{pix}, y_{pix}$) umfasst.

3. Verfahren nach einem der vorhergehenden Ansprüche, wobei der Berechnungsschritt das Bestimmen des orthogonalen Abstands (D) zwischen dem am nächsten gelegenen Punkt ($P_1$) des Objektes (2) und dem Photoempfänger aus dem aufgenommenen Bild (11) umfasst.

4. Verfahren nach einem der vorhergehenden Ansprüche, wobei ferner ein Schritt der Verarbeitung des aufgenommenen Bildes (11) vor dem Berechnen des Durchmessers des Objektes (2) vorgesehen ist.

5. Verfahren nach Anspruch 4, wobei der Schritt der Verarbeitung des aufgenommenen Bildes (11) einen Schritt zum Filtern des aufgenommenen Bildes (11) umfasst.

6. Verfahren nach einem der Ansprüche 4 oder 5, wobei der Schritt der Verarbeitung des aufgenommenen Bildes (11) einen Schritt zum Subtrahieren eines mit ausgeschalteter Lichtquelle aufgenommenen Bildes von einem mit eingeschalteter Lichtquelle aufgenommenen Bild umfasst.

7. Verfahren nach einem der Ansprüche 4 bis 6, wobei der Schritt der Verarbeitung des aufgenommenen Bildes (11) einen Schritt zum Digitalisieren des aufgenommenen Bildes (11) umfasst.

8. Verfahren nach einem der Ansprüche 4 bis 7, wobei der Schritt der Verarbeitung des aufgenommenen Bildes einen Schritt zum Auswählen einer Kurve (11) zur Verwendung für die Berechnung des Durchmessers des Objektes (2) aus dem aufgenommenen Bild umfasst.

9. Verfahren nach Anspruch 8, wobei ferner ein Schritt zum Glätten der zu verwendenden Kurve vorgesehen ist.

10. Verfahren nach einem der vorhergehenden Ansprüche, wobei der Abstand zwischen dem Objekt (2) und dem Photoempfänger (12) zwischen 30 und 350 cm beträgt.

11. Verfahren nach einem der vorhergehenden Ansprüche, wobei das im Wesentlichen zylindrische Objekt ein Baum ist.

12. Verfahren nach einem der vorhergehenden Ansprüche, wobei das im Wesentlichen zylindrische Objekt bezüglich der erleuchteten Schnittlinie geneigt ist, und die Erzeugungs- und Aufnahmeschritte umfassen:

   - Erzeugen einer erleuchteten Linie eines Schnitts mit dem im Wesentlichen zylindrischen Objekt durch die Projektion von Licht in einer Ebene von einer Lichtquelle, und Aufnehmen von mindestens zwei Bildern dieser Schnittlinie mit mindestens einen Photoempfänger, wobei die optische Achse des mindestens einen Photoempfängers auf das Objekt ausgerichtet ist und mit zwei verschiedenen Winkeln bezüglich der Ebene der erleuchteten Schnittlinie geneigt ist,
   - oder Erzeugen von mindestens zwei erleuchteten Linien eines Schnitts mit dem im Wesentlichen zylindrischen Objekt, unter verschiedenen Winkeln, durch die Projektion von Licht in einer Ebene von mindestens einer Lichtquelle, und Aufnehmen eines Bildes von jeder Schnittlinie mit einem Photoempfänger, wobei die optische Achse des Photoempfängers auf das Objekt ausgerichtet ist und bezüglich der Ebene jeder erleuchteten Schnittlinie geneigt ist.

13. Vorrichtung zum Messen eines Durchmessers eines im Wesentlichen zylindrischen Objekts (2) aus einem unbekannten und beliebigen Abstand, mit:

   - einer Lichtquelle (6) zum Erzeugen von Licht in einer Ebene, um eine erleuchtete Linie eines Schnitts (10) mit dem im Wesentlichen zylindrischen Objekt (2) zu bilden,
   - einem Photoempfänger (12), welcher geeignet ist, um ein Bild (11) der Schnittlinie (10) aufzunehmen, wobei die optische Achse (15) des Photoempfängers (12) senkrecht bezüglich der Ebene der Schnittlinie (10) verschoben ist oder die optische Achse (15) des Photoempfängers (12) gegenüber der Ebene der erleuchteten Schnittlinie (10) geneigt ist, wobei das Bild (11) zwei Extrema entsprechend den Extrema (*P2, P3*) der Schnittlinie (10) mit dem im Wesentlichen zylindrischen Objekt (2) aufweist, wobei die zwei Extrema in einer ersten Richtung beabstandet sind, und wobei die Schnittlinie (10) ein Maximum oder ein Minimum auf dem Bild in einer zweiten Richtung, die orthogonal zur ersten Richtung ist, aufweist, und
   - Berechnungsmittel (18) zum Berechnen, ausgehend von dem Bild (11) der Schnittlinie (10), des Durchmessers des im Wesentlichen zylindrischen Objekts (2), wobei die Berechnung auf der Annahme basiert, dass die Projektionen (*OP2, OP3*) vom Photoempfänger (12) auf Punkte auf dem im Wesentlichen zylindrischen Objekt, die den Extrema (P2, P3) entsprechen, Tangenten am im Wesentlichen zylindrischen Objekt (2) sind,

   wobei die Berechnungsmittel ausgelegt sind, den Durchmesser auf Basis von lediglich der Ordinate des höchsten oder niedrigsten Punktes auf dem Bild (11) der Schnittlinie (10) zwischen den Extrema entlang der zweiten Richtung gemessen und den Abszissen der zwei Extrema des Bildes (11) entlang der ersten Richtung gemessen zu bestimmen.

14. Vorrichtung nach Anspruch 13, wobei die Lichtquelle (6) eine Laserlichtquelle ist.

15. Vorrichtung nach einem der Ansprüche 13 oder 14, wobei ein Liniengenerator (8) zwischen der Lichtquelle (6) und dem im Wesentlichen zylindrischen Objekt angeordnet ist.

16. Vorrichtung nach einem der Ansprüche 13 bis 15, wobei der Photoempfänger (12) eine CCD-Kamera ist.

17. Vorrichtung nach einem der Ansprüche 13 bis 16, wobei vor dem Photoempfänger (12) ein Filter (14) angeordnet ist, um die Teile des Bildes herauszufiltern, die nicht zur von der Lichtquelle (6) ausgehenden Lichtebene gehören.

**18.** Vorrichtung nach einem der Ansprüche 13 bis 17, wobei ferner Mittel zur Durchführung einer Bildverarbeitung (18) vorgesehen sind.

**19.** Vorrichtung nach einem der Ansprüche 13 bis 18, wobei der Abstand (D) zwischen dem Objekt (2) und dem Photoempfänger (12) zwischen 30 und 350 cm beträgt.

**20.** Vorrichtung nach einem der Ansprüche 13 bis 19, wobei das im Wesentlichen zylindrische Objekt ein Baum ist.

**21.** Computersystem (18) mit einer Eingabeeinheit (38) zum Empfangen eines Bilds (11) einer Linie eines Schnitts (10) von Licht (4) in einer Ebene mit einem im Wesentlichen zylindrischen Objekt (2) in einem unbekannten und beliebigen Abstand, wobei die optische Achse (15) eines das Bild (11) aufnehmenden Photoempfängers (12) senkrecht bezüglich der Ebene der Schnittlinie (10) verschoben ist, wobei das Bild (11) zwei Extrema aufweist, die die Extrema (*P2*, *P3*) der Schnittlinie (10) mit dem im Wesentlichen zylindrischen Objekt (2) repräsentieren, wobei die zwei Extrema in einer ersten Richtung beabstandet sind, und wobei die Schnittlinie (10) ein Maximum oder ein Minimum in einer zweiten Richtung, die orthogonal zur ersten Richtung ist, aufweist, und
wobei das Computersystem (18) ausgelegt ist, ausgehend von dem Bild (11) der Schnittlinie (10), den Durchmesser des im Wesentlichen zylindrischen Objekts (2) zu berechnen, wobei die Berechnung auf der Annahme basiert, dass die Projektionen (*OP2, OP3*) vom Photoempfänger (12) auf Punkte auf dem im Wesentlichen zylindrischen Objekt, die den Extrema (P2, P3) entsprechen, Tangenten am im Wesentlichen zylindrischen Objekt (2) sind, und wobei zur Berechnung des Durchmessers lediglich die Ordinate des höchsten oder niedrigsten Punktes auf dem Bild (11) der Schnittlinie (10) zwischen den Extrema entlang der zweiten Richtung gemessen und auf den Abszissen der zwei Extrema des Bildes (11) entlang der ersten Richtung gemessen verwendet werden.

**22.** Computersystem nach Anspruch 21, welches ferner ausgelegt ist, eine Bildverarbeitung des Bildes (11) der Schnittlinie (10) durchzuführen.

**23.** Computerprogrammprodukt, welches ausgelegt ist, bei Ausführung auf einem Rechner ein Verfahren nach einem der Ansprüche 1 bis 12 auszuführen.

**24.** Computerlesbarer Datenträger, auf welchem auf einem Rechner ausführbarer Code gespeichert ist, der ausgelegt ist, bei Ausführung auf einem Rechner ein Verfahren nach einem der Ansprüche 1 bis 12 auszuführen.

**Revendications**

**1.** Procédé de mesure du diamètre d'un objet sensiblement cylindrique (2) depuis une distance inconnue et arbitraire, le procédé comprenant les étapes de :

- production d'une ligne éclairée d'intersection (10) avec l'objet sensiblement cylindrique (2) en projetant de la lumière dans un plan à partir d'une source de lumière (6),
- saisie d'une image (11) de cette ligne d'intersection (10) au moyen d'un photorécepteur (12), l'axe optique (15) du photorécepteur étant dirigé vers l'objet et incliné par rapport au plan de la ligne éclairée d'intersection (10), ou bien l'axe optique (15) du photorécepteur (12) étant déplacé perpendiculairement par rapport au plan de la ligne éclairée d'intersection (10), l'image (11) présentant deux extrémités correspondant aux extrémités ($P_2$, $P_3$) de la ligne d'intersection (10) avec l'objet sensiblement cylindrique (2), et les deux extrémités étant séparées dans une première direction, et la ligne d'intersection (10) ayant un point maximal ou minimal dans une seconde direction, qui est orthogonale à la première direction, et
- calcul du diamètre de l'objet sensiblement cylindrique (2) sur la base de l'image (11), le calcul étant basé sur une supposition que les projections ($OP_2$, $OP_3$) à partir du photorécepteur (12) vers des points situés sur l'objet sensiblement cylindrique, et correspondant aux extrémités de l'image, sont des tangentes à l'objet sensiblement cylindrique (2), dans lequel l'étape de calcul comprenant la détermination du diamètre sur la base uniquement de l'ordonnée du point le plus haut ou le plus bas sur l'image (11) de la ligne d'intersection (10) entre les extrémités, tel que mesuré suivant la seconde direction, et sur la base des abscisses des deux extrémités de ladite image (11), telles que mesurées suivant la première direction.

**2.** Procédé selon la revendication 1, dans lequel l'étape de calcul comprend le calcul d'une bissection entre des coordonnées de points dans un plan d'objet (x, y) et des coordonnées de points dans un plan d'image ($x_{pix}$, $y_{pix}$).

**3.** Procédé selon l'une des revendications précédentes, dans lequel l'étape de calcul comprend la détermination, au moyen de l'image (11) saisie, de la distance orthogonale (D) entre le point le plus proche ($P_1$) de l'objet (2) et le photorécepteur (12).

**4.** Procédé selon l'une quelconque des revendications précédentes, comprenant en outre, avant le calcul du diamètre de l'objet (2), une étape de traitement de l'image (11) saisie.

**5.** Procédé selon la revendication 4, dans lequel l'étape de traitement de l'image (11) saisie comprend une étape de filtrage de l'image (11) saisie.

**6.** Procédé selon l'une des revendications 4 ou 5, dans lequel l'étape de traitement de l'image (11) saisie comprend une étape consistant à soustraire une image saisie lorsque la source de lumière est hors fonction, d'une image saisie lorsque la source de lumière est en fonction.

**7.** Procédé selon l'une quelconque des revendications 4 à 6, dans lequel l'étape de traitement de l'image (11) saisie comprend une étape de binarisation de l'image (11) saisie.

**8.** Procédé selon l'une quelconque des revendications 4 à 7, dans lequel l'étape de traitement de l'image saisie comprend une étape de sélection dans l'image saisie (11) d'une courbe à utiliser pour le calcul du diamètre de l'objet (2).

**9.** Procédé selon la revendication 8, comprenant en outre une étape de lissage de la courbe à utiliser.

**10.** Procédé selon l'une quelconque des revendications précédentes, dans lequel la distance entre l'objet (2) et le photorécepteur (12) est comprise entre 30 et 350 cm.

**11.** Procédé selon l'une quelconque des revendications précédentes, dans lequel l'objet sensiblement cylindrique est un arbre.

**12.** Procédé selon l'une quelconque des revendications précédentes, dans lequel l'objet sensiblement cylindrique est incliné par rapport à la ligne éclairée d'intersection, les étapes de production et de saisie comprenant :

- la production d'une ligne éclairée d'intersection avec l'objet sensiblement cylindrique, en projetant de la lumière dans un plan à partir d'une source de lumière, et en saisissant au moins deux images de cette ligne d'intersection au moyen d'au moins un photorécepteur, l'axe optique dudit au moins un photorécepteur étant dirigé vers l'objet et incliné selon deux angles différents par rapport au plan de la ligne éclairée d'intersection, ou
- la production selon deux angles différents d'au moins deux lignes éclairées d'intersection avec l'objet sensiblement cylindrique, en projetant de la lumière dans un plan à partir d'au moins une source de lumière, et en saisissant une image de chaque ligne d'intersection au moyen d'un photorécepteur, l'axe optique du photorécepteur étant dirigé vers l'objet et incliné par rapport au plan de chacune des lignes éclairées d'intersection.

**13.** Dispositif prévu pour la mesure d'un diamètre d'un objet sensiblement cylindrique (2) depuis une distance inconnue et arbitraire, le dispositif comprenant :

- une source de lumière (6) pour produire de la lumière dans un plan afin de former une ligne éclairée d'intersection (10) avec l'objet sensiblement cylindrique (2),
- un photorécepteur (12) propre à faire une image (11) de la ligne d'intersection (10), l'axe optique (15) du photorécepteur (12) étant déplacé perpendiculairement par rapport au plan de la ligne éclairée d'intersection (10), ou l'axe optique (15) du photorécepteur (12) étant incliné par rapport au plan de la ligne éclairée d'intersection (10), l'image (11) présentant deux extrémités représentant les extrémités ($P_2$, $P_3$) de la ligne d'intersection (10) avec l'objet sensiblement cylindrique (2), et les deux extrémités étant séparées dans une première direction, et la ligne d'intersection (10) ayant un point maximal ou minimal sur l'image dans une seconde direction, qui est orthogonale à la première direction, et
- des moyens de calcul (18) pour calculer, à partir de l'image (11) de la ligne d'intersection (10), le diamètre de l'objet sensiblement cylindrique (2), les calculs étant basés sur une supposition que les projections ($OP_2$, $OP_3$) à partir du photorécepteur (12) vers des points situés sur l'objet sensiblement cylindrique et correspondant aux extrémités (P2, P3) sont des tangentes à l'objet sensiblement cylindrique (2),

20

dans lequel les moyens de calcul sont propres à déterminer le diamètre sur la base uniquement de l'ordonnée du point le plus haut ou le plus bas sur l'image (11) de la ligne d'intersection (10) entre les extrémités, tel que mesuré suivant la seconde direction, et sur la base des abscisses des deux extrémités de ladite image (11), telles que mesurées suivant la première direction.

14. Dispositif selon la revendication 13, dans lequel la source de lumière (6) est une source de lumière laser.

15. Dispositif selon la revendication 13 ou 14, dans lequel un dispositif générateur de ligne (8) est placé entre la source de lumière (6) et l'objet sensiblement cylindrique.

16. Dispositif selon l'une quelconque des revendications 13 à 15, dans lequel le photorécepteur (12) est une caméra à CCD.

17. Dispositif selon l'une quelconque des revendications 13 à 16, dans lequel un filtre (14) est placé à l'avant du photorécepteur (12) afin de supprimer par filtrage des parties de l'image qui n'appartiennent pas au plan de lumière provenant de la source de lumière (6).

18. Dispositif selon l'une quelconque des revendications 13 à 17, comprenant en outre des moyens (18) pour l'exécution d'un traitement d'image.

19. Dispositif selon l'une quelconque des revendications 13 à 18, dans lequel la distance (D) entre l'objet (2) et le photorécepteur (12) est comprise entre 30 et 350 cm.

20. Dispositif selon l'une quelconque des revendications 13 à 19, dans lequel l'objet sensiblement cylindrique est un arbre.

21. Système informatique (18), comprenant un dispositif d'entrée (38) pour recevoir une image (11) d'une ligne d'intersection (10) de lumière (4) dans un plan avec un objet sensiblement cylindrique (2) situé à une distance inconnue et arbitraire, l'axe optique (15) d'un photorécepteur (12), saisissant ladite image (11), étant déplacé perpendiculairement par rapport au plan de la ligne d'intersection (10), l'image (11) présentant deux extrémités représentant les extrémités ($P_2$, $P_3$) de la ligne d'intersection (10) avec l'objet sensiblement cylindrique (2), et les deux extrémités étant séparées dans une première direction, et la ligne d'intersection (10) ayant un point maximal ou minimal dans une seconde direction, qui est orthogonale à la première direction, le système informatique (18) étant propre à calculer, sur la base de l'image (11) de la ligne d'intersection (10), le diamètre de l'objet sensiblement cylindrique (2), le calcul étant basé sur une supposition que les projections ($OP_2$, $OP_3$) à partir du photorécepteur (12) vers des points situés sur l'objet sensiblement cylindrique et correspondant auxdites extrémités ($P_2$, $P_3$) sont des tangentes à l'objet sensiblement cylindrique (2), et à utiliser, pour le calcul dudit diamètre, uniquement l'ordonnée du point le plus haut ou le plus bas sur l'image (11) de la ligne d'intersection (10) entre les extrémités, tel que mesuré suivant la seconde direction, et les abscisses des deux extrémités de ladite image (11), telles que mesurées suivant la première direction.

22. Système informatique selon la revendication 21, propre en outre à exécuter le traitement d'image sur l'image (11) de la ligne d'intersection (10).

23. Programme informatique, propre à exécuter un procédé selon l'une quelconque des revendications 1 à 12, lors du passage sur un dispositif de calcul.

24. Support de données lisibles par ordinateur, sur lequel est conservé un code exécutable par ordinateur, propre à exécuter un procédé selon l'une quelconque des revendications 1 à 12, lors du passage sur un dispositif de calcul.

**Fig. 1**

**Fig. 2a**

**Fig. 2b**

**Fig. 3**

**Fig. 5**

**Fig. 6**

**Fig. 4**

A

B

C

**Fig. 7**

EP 1 305 567 B1

**Fig. 8**

**Fig. 9**

**Fig. 10**

**Fig. 11**

**Fig. 12**

**Fig. 13**

(a) $\rho_R$ vs. $\theta$, with $R = 15$ cm, for various distances.   (b) $\rho_R$ vs. $\theta$, with $D = 1.5$ m, for various radii.   (c) $\rho_R$ vs. $\varphi$, with $R = 15$ cm and $D = 1.5$ m.

Relative error $\rho_R$ on $R$ if the cylinder orientation is not taken into account. $\theta$ and $\varphi$ are never simultaneously non equal to zero.

**Fig. 14**